Europäisches Patentamt

(19) European Patent Office

Office européen des brevets

(11) Numéro de publication: **0 168 306**
**B1**

(12) **FASCICULE DE BREVET EUROPÉEN**

(51) Int. Cl.⁴: **F 16 K 31/08**

(45) Date de publication du fascicule du brevet:
16.12.87

(21) Numéro de dépôt: **85401221.8**

(22) Date de dépôt: **19.06.85**

(54) Dispositif de commutation bistable, notamment pour un circuit d'alimentation en oxygène à bord d'un aéronef et procédé de mise en oeuvre.

(30) Priorité: **19.06.84  FR 8409591**

(43) Date de publication de la demande:
**15.01.86 Bulletin 86/3**

(45) Mention de la délivrance du brevet:
**16.12.87 Bulletin 87/51**

(84) Etats contractants désignés:
**DE FR GB IT NL**

(56) Documents cité:
**DE-A-1 908 136**
**FR-A-2 205 645**
**US-A-3 200 591**
**US-A-3 383 064**
**US-A-3 502 105**

(73) Titulaire: **SOCIETE DE FABRICATION D'INSTRUMENTS DE MESURE (S.F.I.M.), 13, avenue Marcel Ramolfo- Garnier, F-91301 Massy (FR)**

(72) Inventeur: **Gosse, Dominique, 3, Square Pergolèse, F-78150 Le Chesnay (FR)**
Inventeur: **Silber, Gérard, 15, Résidence Croix Blanche, F-91380 Chilly Mazarin (FR)**

(74) Mandataire: **Schrimpf, Robert, Cabinet Regimbeau 26, Avenue Kléber, F-75116 Paris (FR)**

## Description

La présente invention concerne un dispositif de commutation bistable pour ouvrir et fermer un circuit de gaz et elle s'applique notamment à un circuit d'oxygène à bord d'un aéronef.

On connaît un dispositif comportant une électrovanne bi-stable dont le noyau de l'électroaimant est constitué par un piston creux qui se déplace en face d'un siège et qui est traversé par le courant d'oxygène, la commande de l'électro-vanne appliquant le piston contre le siège ou l'écartant du siège (voir p.ex. US-A-3383084).

Dans un tel dispositif, des raisons d'encombrement et de poids limitent les dimensions des bobines de l'électro-vanne et les forces de déplacement du piston sont, par conséquent, limitées de façon correspondante.

La présente invention vise à pallier cet inconvénient.

Selon l'invention, le dispositif comporte, en aval dudit piston, sur le trajet du gaz, un clapet taré et l'extrémité du piston qui forme clapet et qui se déplace en face du siège détermine entre elle et ledit clapet taré un espace résiduel lorsque le piston creux et le clapet taré sont en position de fermeture.

L'avantage de cette caractéristique est que lors d'une purge du circuit aval, alors que le circuit amont est toujours sous pression, la tête du piston en position fermée reste soumise à une pression résiduelle et son décollement vers sa position d'ouverture nécessite seulement que l'on surmonte la pression différentielle entre la pression amont et la pression de tarage alors qu'en l'absence du clapet taré il faudrait surmonter la totalité de la pression amont.

Cette caractéristique s'applique à tout dispositif de commutation bistable à électro-aimants mais, dans une réalisation préférée et selon une autre particularité de la présente invention qui se combine avantageusement à la caractéristique précédente, on utilise conjointement des aimants permanents et des électro-aimants.

Plus précisément, selon l'invention, on utilise, pour solliciter le piston creux, deux ventouses à impulsion disposées face à face et traversées axialement par le piston creux, chaque ventouse comprenant de façon en soi connue un aimant permanent central entouré par une bobine, et une contreplaque étant disposée dans l'intervalle entre les deux ventouses et fixée au piston creux.

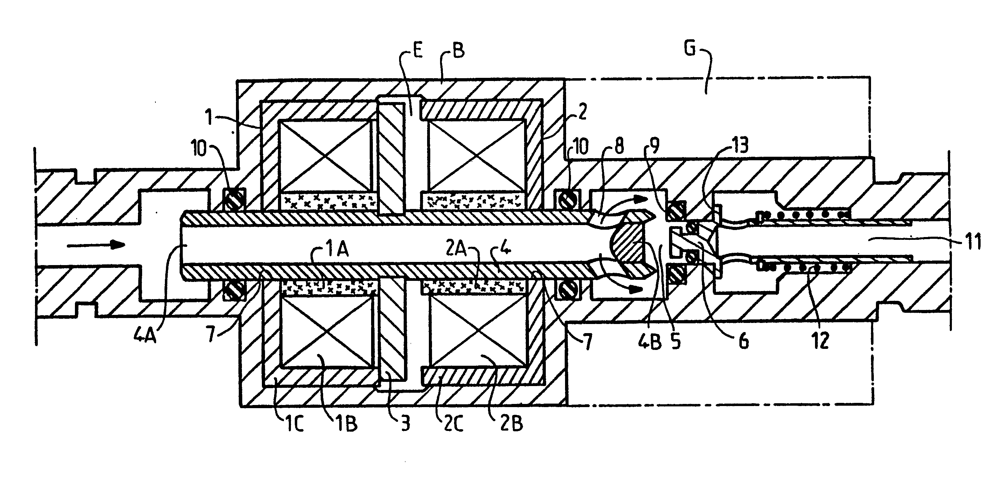

On décrira ci-après un dispositif conforme à l'invention, en référence à la figure unique du dessin joint qui est une coupe schématique du dispositif par un plan axial.

Le dispositif comprend deux ventouses à impulsion 1,2 disposées face à face dans un carter B.

Chaque ventouse comprend, de façon en soi connue, un aimant central 1A,2A entouré par une bobine 1B,2B, dans un boitier de ventouse 1C,2C.

Selon l'invention, l'aimant central 1A,2A est creux et le boîtier 1C,2C est percé d'un orifice 7 correspondant. Un piston creux 4 est monté à coulisse dans les aimants creux et traverse les deux orifices 7. Les deux boîtiers 1C,2C des ventouses disposées face à face déterminent entre eux un espace E dans lequel peut se déplacer à translation une contreplaque 3 qui est fixée au piston 4. La course de la contreplace est par exemple de 1 mm.

Le piston creux présente une extrémité ouverte 4A et une extrémité fermée 4B ainsi que des ouvertures latérales 8 à proximité de cette extrémité fermée. L'extrémité fermée du piston se déplace en face d'un siège pourvu d'un organe d'étanchéité 9, de façon en soi connue. Le carter B détermine un passage longitudinal pour le déplacement du piston et pour l'arrivée et la sortie de gaz et des moyens en soi connus sont prévus pour assurer l'étanchéité autour de ce passage.

La position du piston représentée sur la figure est une position d'ouverture où la contreplaque 3 est appliquée contre l'aimant permanent 1A et le boîtier 1C de la ventouse 1. Pour déplacer le piston dans sa position de fermeture en direction du siège 9, on envoie dans la bobine 1B de la ventouse 1 une impulsion en sorte que la bobine crée un champ de sens opposé à celui de l'aimant 1A. Si on le désire, on peut aussi envoyer une impulsion dans la bobine 2B de la ventouse 2 pour que cette bobine crée un champ de même sens que celui de l'aimant permanent 2A. Ces impulsions sont envoyées simultanément ou avec un court décalage. Après coupure du courant, la contreplaque 3 reste appliquée contre la ventouse 2. Pour faire revenir le piston en position d'ouverture, on opère en sens inverse.

On comprend que dans un tel dispositif ce sont essentiellement les aimants permanents qui créent les forces de déplacement du piston alors que dans le dispositif antérieur évoqué précédemment, on utilise uniquement les champs créés par des bobines. Dans le dispositif de la présente invention, lorsqu'on utilise des champs créés par les bobines, ce n'est pas pour déplacer le piston mais pour annuler le champ d'un aimant permanent ou pour ajouter au champ d'un aimant permanent.

Les bobines sont commandées par un dispositif électronique G qui envoie un courant à la bobine voulue et le coupe après un temps déterminé (impulsion de courant) réglé par un temporisateur et, par exemple, de l'ordre de 1 seconde. Le dispositif G inverse le courant pour commander le mouvement inverse.

Dans la réalisation représentée, les aimants des deux ventouses ont des polarités inverses, ce qui favorise le déplacement de la contreplaque. En variante, on utilise des ventouses dont les aimants ont même polarité.

La course de la contreplaque est par exemple de l'ordre de 1 mm. Cette valeur n'est pas limitative.

La tête fermée 4B du piston est concave de façon à réaliser un appui franc sur le siège et le dispositif comporte en aval du piston creux dans le sens de déplacement du gaz, un dispositif auxiliaire constituant un clapet taré à la sortie du siège 9.

Dans l'exemple représenté, ce clapet taré est constitué par une extrémité fermée 6 d'un piston creux 11 monté à translation à la sortie du siège 9 et poussé en position de fermeture par un ressort taré 12. La position de fermeture du piston creux 11 est déterminée par la butée d'une colerette du piston contre une surface d'appui 13.

Lorsque ce clapet est en position de fermeture, du fait de la forme concave de la tête de piston, il existe entre le siège, le clapet en position de fermeture et la tête de piston en position de fermeture un espacement résiduel 5 qui se trouve à la pression tarée.

Lors d'une purge du circuit aval, alors que le circuit amont est toujours sous pression, la tête du piston en position fermée reste soumise à une pression résiduelle et son décollement vers sa position d'ouverture nécessite seulement que l'on surmonte la pression différentielle entre la pression amont et la pression de tarage alors qu'en l'absence du clapet taré il faudrait surmonter la totalité de la pression amont.

**Revendications**

1. Dispositif de commutation bistable pour ouvrir et fermer un circuit de gaz, notamment un circuit d'oxygène à bord d'un aéronef, ce circuit comprenant un piston (4) sollicité par des électro-aimants, ce piston (4) étant creux et traversé par le gaz et ce piston étant monté à translation en face d'un siège (9) contre lequel une extrémité du piston (4) formant clapet s'appuie en position de fermeture du circuit, caractérisé en ce qu'il comporte en aval dudit piston (4), sur le trajet du gaz, un clapet taré (6,11,12,13) et en ce que l'extrémité (4B) du piston (4) qui forme clapet et qui se déplace en face du siège (9) détermine entre elle et ledit clapet taré un espace résiduel (5) lorsque le piston creux (4) et le clapet taré (6,11,12,13) sont en position de fermeture.

2. Dispositif selon la revendication 1, caractérisé en ce que le clapet taré est constitué par une extrémité fermée (6) d'un piston creux (11) monté à translation à la sortie du siège (9) et poussé en position de fermeture par un ressort taré (12).

3. Dispositif selon la revendication 1 ou 2, caractérisé en ce que ladite extrémité (4B) du piston est une extrémité fermée qui présente des orifices latéraux (8) pour le passage du gaz, cette extrémité étant apte à s'appuyer contre un siège (9) autour d'une sortie de gaz qui est fermée lorsque le piston est en appui et qui est ouverte et communique avec les orifices (8) lorsque le piston est écarté du siège.

4. Dispositif selon l'une des revendications 1 à 3, caractérisé en ce qu'il comporte deux ventouses à impulsion (1,2) disposées face à face avec un intervalle (E) entre les deux ventouses à impulsion et une contreplaque (3) disposée dans cet intervalle et fixée au piston (4), en sorte que le déplacement du piston est commandé par les ventouses.

5. Dispositif selon la revendication 4, caractérisé en ce que les aimants (1A,2A) des deux ventouses (1,2) ont des polarités inverses.

6. Dispositif selon l'une des revendications 4 et 5, caractérisé en ce que la course de la contreplaque (3) est d'environ 1 mm.

7. Dispositif selon l'une des revendications 4 à 6, caractérisé en ce qu'il comporte des moyens pour envoyer des impulsions de courant à l'une ou à l'autre des bobines (1B,2B) des ventouses.

8. Procédé pour la mise en oeuvre d'un dispositif selon l'une des revendications 4 à 7, caractérisé en ce qu'il comprend la commande des bobines des deux ventouses en sorte que l'une des bobines crée un champ de sens opposé à celui de l'aimant permanent de la bobine et que l'autre bobine crée un champ de même sens que celui de l'aimant permanent de l'autre bobine.

**Patentansprüche**

1. Bistabile Umsetzvorrichtung zum Öffnen und Schließen einer Gasleitung, insbesondere einer Sauerstoffleitung an Bord eines Flugzeugs, die einen von Elektromagneten betätigten Kolben (4) umfaßt, der hohl und vom Gas durchsetzt ist, und der längsverschieblich gegenüber einem (Ventil-)Sitz (9) angeordnet ist, gegen den sich in Leitungsverschlußstellung ein als Verschlußklappe ausgebildetes Ende des Kolbens (4) abstützt, dadurch gekennzeichnet, daß stromabwärts vom Kolbens (4) im Gasstromverlauf ein vorgespannter Klappenmechanismus (8,11,12,13) vorgesehen ist, und daß das Ende (4B) des Kolbens (4), das die Verschlußklappe bildet, und das gegenüber dem Sitz (9) verschieblich angeordnet ist, zwischen sich und dem vorgespannten Klappenmechanismus einen Restraum (5) festlegt, wenn der hohle Kolben (4) und der vorgespannte Klappenmechanismus (6,11, 12,13) sich in Schließstellung befinden.

2. Vorrichtung nach Anspruch 1, dadurch gekennzeichnet, daß der vorgespannte Klappenmechanismus von einem verschlossenen Ende (6) eines hohlen Kolbens (11) gebildet ist, der am Auslaß des Sitzes (9) längsverschieblich angeordnet und durch eine vorgespannte Feder (12) in Schließstellung gedrängt ist.

3. Vorrichtung nach einem der Ansprüche 1 oder 2, dadurch gekennzeichnet, daß das Kolbenende (4B) verschlossen ist bis auf seitliche Öffnungen (8) für den Gasdurchtritt und dazu ausgelegt ist, sich gegen einen Sitz (9) um einen Gasauslaß herum abzustützen, der verschlossen ist, wenn der Kolben sich an ihm abstützt, und der geöffnet ist und mit den Öffnungen (8) des Kolbens in Verbindung steht, wenn der Kolben vom Sitz abgehoben ist.

4. Vorrichtung nach einem der Ansprüche 1 bis 3, dadurch gekennzeichnet, daß zwei Seite an Seite mit einem Zwischenraum (E) angeodnete Magnetantriebe (1,2) sowie ein Anriebsorgan (3) vorgesehen sind, das in diesem Zwischenraum angeordnet und am Kolben (4) derart befestigt ist, daß die Kolbenverschiebung von den Magnetantrieben gesteuert wird.

5. Vorrichtung nach Anspruch 4, dadurch gekennzeichnet, daß die Magnete (1A,2A) der beiden Magnetantriebe (1,2) entgegengesetzte Polarität aufweisen.

6. Vorrichtung nach einem der Ansprüche 4 oder 5, dadurch gekennzeichnet, daß der Hub des Antriebsorgans (3) etwa 1 mm beträgt.

7. Vorrichtung nach einem der Ansprüche 4 bis 6, dadurch gekennzeichnet, daß Einrichtungen zum Anlegen von Stromimpulsen an die eine oder an die andere der Spulen (1B,2B) der Magnetantriebe vorgesehen sind.

8. Verfahren zum Betrieb einer Vorrichtung nach einem der Ansprüche 4 bis 7, dadurch gekennzeichnet, daß die Spulen der beiden Magnetantriebe derart gesteuert werden, daß die eine der Spulen ein Feld erzeugt, das entgegengesetzt zum Feld des Permantmagneten der Spule ist, und daß die andere Spule ein Feld erzeugt, das gleichgerichtet zum Feld des Permanantmagneten der anderen Spule ist.

## Claims

1. Bistable switching device for opening and closing a gas circuit, in particular an oxygen circuit on board an aicraft, this circuit comprising a plunger (4) acted on by electromagnets, this plunger (4) being hollow and passed through by the gas and being fitted for translation opposite a seat (9) against which one end of the plunger (4) forming a valve bears in the position for closing the circuit, characterised in that it comprises a calibrated valve (6, 11, 12, 13) downstream of the said plunger, in the path of the gas, and the end (4B) of the plunger (4) which forms a valve and which shifts opposite the seat (9) defines a residual space (5) between the end and the said calibrated valve when the hollow plunger (4) and the calibrated valve (6, 11, 12, 13) are in the closed position.

2. Device according to claim 1, characterised in that the calibrated valve is constituted by a closed end (6) of a hollow plunger (11) fitted for translation at the outlet of the seat (9) and pushed into the closed position by a calibrated spring (12).

3. Device according to claim 1 or 2, characterised in that the said end (4B) of the plunger is a closed end which has lateral orifices (8) for the passage of the gas, this end being adapted to bear against a seat (9) around a gas outlet which is closed when the plunger is in a bearing state and is open and communicates with the orifices (8) when the plunger is moved away from the seat.

4. Device according to any one of claims 1 to 3, characterised in that it comprises two pulse cups (1, 2) disposed face to face with a gap (E) between the two cups and a counterplate (3) disposed in this gap and fixed to the plunger (4), so that the shifting of the plunger is controlled by the cups.

5. Device according to claim 4, characterised in that the magnets (1A, 2A) of the two cups (1, 2) have opposite polarities.

6. Device according to either one of claims 4 and 5, characterised in that the stroke of the counterplate (3) is about 1 mm.

7. Device according to any one of claims 4 to 6, characterised in that it comprises means for sending current pulses to one or the other of the coils (1B, 2B) of the cups.

8. Method of employing a device according to any one of claims 4 to 7, characterised in that it comprises control of the coils of the two cups so that one of the coils creates a field of direction opposite to that of the permanent magnet of the coil and the other coil creates a field of the same direction as that of the permanent magnet of the other coil.